# EUROPEAN PATENT APPLICATION

(11) **EP 3 182 327 A1**
(43) Date of publication of application: **21.06.2017**
(21) Application number: 15200705.0
(22) Date of filing: 17.12.2015
(51) Int. Cl.: G06K 9/00, G06K 9/20

(54) **A SIGN IDENTIFICATION SYSTEM FOR A VEHICLE**

(71) Applicant: 3M Innovative Properties Company, St. Paul, MN 55133-3427 (US)
(72) Inventor: Lierse, Markus, 41453 Neuss (DE); Geldmacher, Andreas, 41453 Neuss (DE); Hansen, Katja, 41453 Neuss (DE)
(74) Representative: Bergen, Katja

(57) **Abstract**

Disclosed is an identification system to improve safety on roads and allow for the driver or for the vehicle itself, if it is autonomous or semi-autonomous, to have readable and useful information about road signs. The disclosed identification system comprises an IR viewable markers with marker communication information positioned on the viewable surface of signs that can be read by a vehicle information system to provide information to the vehicle. Information that the marker communication information may convey would allow the vehicle information system to recognize critical road sign information. Then, the vehicle information system could respond to the information received from the marker communication information.

## Description

### Field

The present disclosure relates to an identification system for use with a vehicle that comprises a marker that can assist in sign recognition. In particular, the present disclosure relates to the use of infrared viewable markers positioned on the viewable surface of signs.

### Background

Road signs vary in size, shape, images, and words to communicate to a driver. For example, many signs have similar perimeter shapes yet convey different messages or images. Images on a sign, like an arrow, can convey different meanings depending on the other features on the sign. For example, a sign with an arrow might indicate a "one way" road, while another similar-sized and colored sign with an arrow might indicate the direction to a destination. Critical road signs, whose function is to provide important information for safe vehicle operation, can be difficult to identify and differentiate from the broader range of signs with similar shapes.

The electronic and communication capabilities available could aid in identification and communication between the road sign and a vehicle. Camera-based vision systems in particular are becoming common in new vehicles. However, current vision systems typically have difficulty accurately reading the broad range of highway road signs. For example, as discussed, a reader might identify the arrow, but not accurately distinguish the context of identifying whether the arrow might indicate a "one way" sign or a direction to a destination. There is a need for an improved identification system to more accurately recognize critical road signs.

### Summary

Disclosed is an identification system to improve safety on roads and allow for the driver or for the vehicle itself (if it is autonomous or semi-autonomous) to have readable and useful information about road signs. The disclosed identification system comprises a marker with marker communication information that can be read by a vehicle information system to provide information to the vehicle. Information that the marker communication information may convey would allow the vehicle information system to recognize, or both detect and recognize critical road sign information. Then, the vehicle information system could respond to the information received from the marker communication information.

In one embodiment, an identification system comprises an infrared viewable marker with marker communication information, a vehicle information system on a vehicle comprising an infrared reader to read the marker communication information and a processor to convert the marker communication information into output information.

In one embodiment, an identification system between a sign and a vehicle comprises a sign with sign communication information, a marker at a predetermined location relative to the viewable surface of the sign, wherein the marker comprises marker communication information comprising optical communication, a vehicle information system comprising a light source to send light to the marker, a reader to read the optical communication, and a processor to convert the optical communication into output information. The optical communication of the marker is retroreflected light from the light source. The output information is at least recognition of the sign communication information.

In one embodiment, a marker for a sign having sign communication information comprises a retroreflective sheet, and marker communication information that comprises optical communication that is reflected light from the retroreflective sheet. The marker is at a predetermined location relative to the viewable surface of the sign. The marker communication information communicates information about the sign communication information.

In any one of the described embodiments, the identification system further comprises any one of:
- a light source for sending infra-red or near infra-red light to the marker.
- the marker comprises retroreflective film.
- the retroreflective film reflects the light from the light source at a specific angle with respect to the reader.
- the marker comprises multi-layer optical film.
- the multi-layer optical film reflects IR wavelengths of the light source away from the reader.
- the marker comprises a wavelength-specific ink viewable by the reader.
- the reader receives the marker communication information in a specific range of wavelengths.
- the specific range of wavelengths of the marker communication information is outside of the range of wavelengths visible by the human eye.
- the specific range of wavelengths of the marker communication information is infrared or near-infrared.
- the reader of the vehicle information system comprises a lens to receive the marker communication information.
- the reader of the vehicle information system comprises a camera with a lens to receive the marker communication information.
- the output information is used to control an operation of the vehicle.
- the output information is a detection of the presence of the sign and a recognition of the sign communication information.

### Brief Description of the Drawings

**FIG. 1** is a top view of one embodiment of an identification system.
**FIG. 2** illustrates an exemplary traffic sign as viewed with visible light.
**FIG. 3** illustrates an exemplary traffic sign viewed under IR light where a critical portion of the sign marker information overlaps visible-light-viewable sign information.
**FIG. 4** illustrates an exemplary traffic sign viewed under IR light according to some embodiments of the present disclosure.
**FIG. 5** illustrates the exemplary traffic sign of **FIG. 4** where a critical portion of the visible-light-viewable sign information is obscured.

While the above-identified drawings and figures set forth embodiments of the invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of this invention. The figures may not be drawn to scale.

### Detailed Description

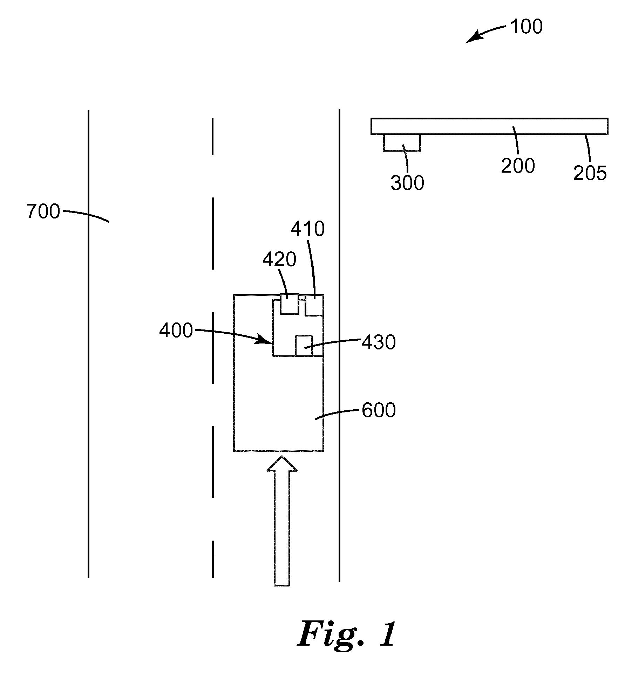

The identification system **100** comprises a marker **300** that includes marker communication information that can be read by a vehicle information system. **FIG. 1** is a top view of a roadway **700** with a vehicle **600** driving in the direction of the arrow. Also, shown in **FIG. 1** is a sign **200** which contains sign communication information, such as "STOP" or an arrow to turn right. Marker **300** that includes marker communication information is positioned on a portion of viewable surface **205** of sign **200.** In one embodiment, the marker communication information may communicate information about the sign communication information. On the vehicle **600** is a vehicle information system **400** for reading and processing the marker communications information.

As used herein, the viewable surface of a sign refers to the surface of the sign intended to convey information to a driver. This surface typically includes images, words, or a combination of images and words to communicate to a driver. The images and words are presented in visible-light-viewable form such that a typical driver can discern the information intended to be conveyed by the sign when illuminated with visible light.

It would be costly and time consuming to completely redesign existing road signs to include information that would be more easily read by a reader on a vehicle. Therefore, the identification system **100** disclosed includes a marker **300,** which discretely contains marker communication information. Generally, the marker **300** is attached to a sign **200.** For example, the marker **300** could be attached during the original construction of the sign **200,** or may be separately attached to a finished, already existing sign **200.** If attached to a finished sign **200,** the marker **300** could be adhesively secured to the sign **200.** As the identification system **100** relies on optical identification of the marker communication information of the marker **300,** the marker **300** is attached to the viewable surface **205** of the sign **200.**

The marker **300** comprises marker communication information. Marker communication information is information that the marker **300** communicates to the vehicle information system **400** which reads and processes the marker communication information (the details of the vehicle information system **400** are described below).

In one embodiment, the marker **300** comprises a passive communication device. A passive communication device is a device that contains marker communication information that can be read, and the marker communication information does not change. Therefore, in such an embodiment, the marker communication information comprises static information, which is information that does not change. In one embodiment, the static information comprises an optical communication such as, for example, machine-readable text, graphics, indicia, patterns, shape, or a code, such as a machine-readable code (e.g., bar code or QR code).

In embodiments where the marker communication information comprises an optical communication, the optical communication may be reflected light from a source which illuminates the marker. To reflect light, the marker **300** may comprise reflective and/or retroreflective materials. The term "reflective" as used herein refers to the attribute of reflecting an obliquely incident light ray at an equal angle measured with respect to the surface normal of the marker wherein the incident and reflected rays and the surface normal are coplanar (also called specular reflection). The term "retroreflective" as used herein refers to the attribute of reflecting an obliquely incident light ray in a direction antiparallel to its incident direction, or nearly so, such that it returns to the light source or the immediate vicinity thereof. The incident direction is typically angularly displaced from the surface normal of the sign or marker by the entrance angle. Preferably the return light is angularly displaced from its incident direction by the observation angle so that it can be read by a detector which is displaced from the source (e.g., the human eye which is displaced relative to the vehicle head light). Both entrance and observation angle vary as a function of vehicle position relative to a sign or marker. Two known types of retroreflective sheeting are microsphere-based sheeting and cube corner sheeting (often referred to as prismatic sheeting). Microsphere-based sheeting, often referred to as "beaded" sheeting, employs a multitude of microspheres typically at least partially embedded in a binder layer and having associated specular or diffuse reflecting materials (e.g., pigment particles, metal flakes, vapor coats) to retroreflect incident light. Illustrative examples are described in, for example, U.S. Patent Nos. 3,190,178 (McKenzie), 4,025,159 (McGrath), and 5,066,098 (Kult). Cube corner retroreflective sheeting, often referred to as "prismatic" sheeting, comprises a body portion typically having a substantially planar front surface and a structured rear surface comprising a plurality of cube corner elements. Each cube corner element comprises three approximately mutually perpendicular optical faces. Illustrative examples are described in, for example, U.S. Patent Nos. 1,591,572 (Stimson), 4,588,258 (Hoopman), 4,775,219 (Appledorn et al.), 5,138,488 (Szczech), and 7,261,426 (Smith et al.). A seal layer may be applied to the structured surface to keep contaminants away from individual cube corners. Flexible cube corner sheetings, such as those described, for example, in U.S. Patent No. 5,450,235 (Smith et al.) can also be incorporated in embodiments or implementations of the present application. Retroreflective sheeting for use in connection with the present application can be, for example, either matte or glossy.

In some embodiment, the reflected light of the marker communication information may be light at a specific wavelength. For example, the marker communication information may comprise infra-red or near-infra-red light. An infra-red or near-infra-red optical communication would not be significantly visible in the visible light spectrum, and therefore would not cause a visual distraction to the driver of the vehicle **600.**

Generally, infra-red light refers to light having a wavelength between 0.7 and 1000 microns. Near infra-red refers to a subset of the infra-red spectrum, specifically light having a wavelength between 0.7 and 3 microns. As used herein, IR refers to infra-red light and encompasses near infra-red light.

In embodiments where the marker communication information comprises optical communication that is light at a specific wavelength, the marker **300** may comprise a layer to control the reflected light. In one embodiment, the marker **300** comprises multi-layer optical film to control the reflected light. In one embodiment, the marker **300** comprises wavelength specific inks.

For example, the marker **300** may include permanent or temporary attachment of one or more visible-light-transparent, infrared-reflecting multi-layer optical films to the retroreflective sheeting. Such attachment may occur by, for example, use of an adhesive. The use of areas of visible-light-transparent, infrared-reflecting multi-layer optical films on the marker **300** causes specific wavelengths of light, such as near-infrared light, incident on the marker **300** to be reflected from the otherwise retroreflective light path and thus creates regions of high contrast compared to adjacent areas on the marker **300** without multi-layer optical films when viewed. The specific wavelengths are reflected away from the vehicle information system **400** that would read the marker communication information. Multi-layer optical films are effectively wavelength-specific reflecting mirrors with high transmission in the different wavelength regions such as the visible portion of the wavelength spectrum. Meanwhile, the image/graphics/indicia/pattern on the marker **300** remains largely unaffected by the presence of the multi-layer optical film(s) when viewed with visible light. Because the visibly-transparent, wavelength-specific reflecting multi-layer optical film(s) are not significantly visible in the visible portion of the wavelength spectrum, the image/graphics/indicia/pattern created using the multi-layer optical film(s) is not visible to the human eye in the visible portion of the wavelength spectrum and does not cause a visual distraction to the driver.

The multi-layer optical film chosen for any specific implementation will depend on the desired optical, structural, and durability characteristics. As such, desirable multi-layer optical films will vary based on the intended application. Some exemplary multi-layer optical films are described in, for example, U.S. Patent No. 6,024,455 and PCT Publication No. WO 95/17692. Exemplary commercially available multi-layer optical films include, for example, Vikuiti Clear Card Filter, Solar Reflective Film, and SM 857, all manufactured by 3M Company of St. Paul. The reflectance and transmission spectrum of a particular multi-layer optical film depends, in part, on the optical thickness of the individual layers along the various axes, and is substantially determined by the Fresnel coefficient. Films can be designed to reflect infrared, visible, or ultraviolet light by choice of the appropriate optical thicknesses. The desired relationship between refractive indices of polymeric layers can be achieved by selection of appropriate materials and appropriate processing conditions.

Alternatively or in combination, the wavelength-specific dye may be used to provide the marker communication information (for example, infra-red reflecting or absorbing dye). Exemplary descriptions of such dyes may be found in, for example, U.S. Publication No. 2007/0082963. Commercially-available infra-red reflecting dyes include, for example, those manufactured by H.W. Sands Corporation of Juniper, Florida and Epolin Corporation of Newark, NJ. One exemplary advantage of multi-layer optical film usage, especially multi-layer optical films with high visible light transmission, is that unlike near-infrared absorbing dyes, tinting or color change can be largely avoided or minimized.

Alternatively or in combination, polymeric film comprising an IR-absorbing substance, e.g., an IR-absorbing dye) may be used. For example, polymeric films comprising an IR-absorbing substance may be formed, e.g., extruded. In some embodiments, the IR-absorbing substance may be incorporated in a pattern corresponding to the desired marker communication information, for example, lines of various widths. In some embodiments, portions of the polymeric film comprising an IR-absorbing substance may be applied to the viewable surface of the sign in a desired pattern corresponding to the desired marker communication information.

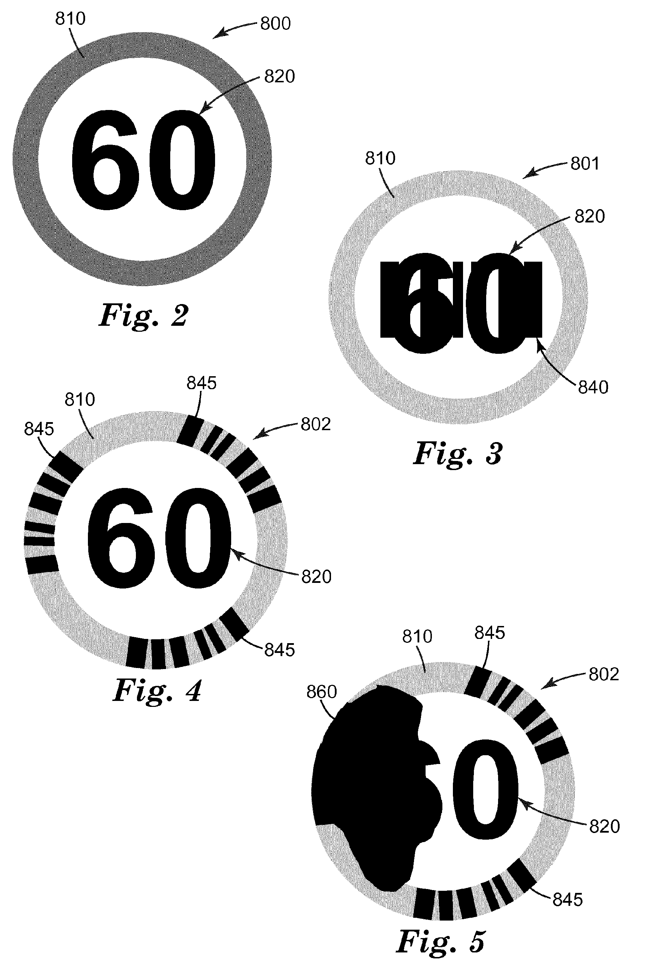

**FIG. 2** illustrates one exemplary traffic sign **800** as viewed under visible light. This corresponds to how the sign would appear when seen by a typical driver. Although sign **800** is circular, other sign shapes may also be used. Circular and triangular signs are most common, but squares, rectangles, octagons, and other shapes are also possible.

Traffic sign **800** includes border **810** and critical information **820.** The use of borders is particularly common in European and international traffic signs. Often, the borders are of a specific color associated with some feature of sign. For example, in some regions, red borders indicate mandatory behavior. For example, if border **810** of traffic sign **800** was red, this may indicate that the critical information **820,** in this case the number "60", represents a maximum speed limit.

Generally, the critical information on a traffic sign is printed in black. This could include a number indicating a speed limit, a symbol such as an arrow indicating priority, or text such as "Stop", "Halte", or "Toll". In order to make the sign readily visible and understandable to drivers, the black-printed critical information often occupies a large portion of the center of the traffic sign. This creates problems when IR light is used to capture marker information.

Typical black inks absorb both visible and IR light. Thus, critical information printed with black ink will appear as black in the IR spectrum, i.e., the critical information is IR-visible. Traffic sign **801,** shown in **FIG. 3****,** includes a visible-light transparent, IR readable marker placed over the black-printed information on the sign. Such a sign will appear as shown in **FIG. 2** when viewed under visible light. However, as shown in **FIG. 3****,** when traffic sign **801** is viewed using IR light, both the black-printed, critical information **820** and the information intended to be communicated by the marker, e.g., bar code **840,** will interfere with each other.

Traffic sign **802,** as viewed under IR light, according to some embodiments of the present disclosure is illustrated in **FIG 4**. Under visible light, this sign would appear as shown in **FIG. 2****.** However, when illuminated with IR light, IR-detectable information, e.g., bar code **845** appears. Because bar code **845** is positioned in border **810** of the sign, the black-printed, critical information does not interfere with the marker communication, even though this information is visible in IR light.

In **FIG. 4****,** border **810** is shown, but depending on the color and composition of the medium (e.g., ink) used to form the border, under IR light, border **810** is substantially or completely invisible to the human eye. This results in high contrast between barcode **845** and border **810.**

In some embodiments, a single bar code may be positioned in the border. However, as shown in **FIG. 4**, in some embodiments, a marker may include two or more submarkers. In some embodiments, each distinct submarker may convey different information. In some embodiments, at least two of the submarkers may communicate the same information. In the embodiment of **FIG. 4****,** three submarkers are illustrated as barcodes **845.** In some embodiments, the bar codes may be redundant, communicating the same the information.

As illustrated in **FIG. 5****,** this redundancy can aide in ensuring detection and recognition of the marker even though portions of the critical information of the sign are covered by an obstruction **860.** For example, in some cases portions of a traffic sign may be obscured by dirt, snow, or ice on the sign. In some cases, a tree or other obstacle may block a portion of the viewing surface of the sign. In such cases, the obstruction may even be enough to prevent a driver for discerning the meaning of the sign. By using redundant bar codes, the system of the present disclosure can increase the probability of proper sign detection and recognition.

Although bar codes were used to illustrate the marker communication information in the exemplary embodiments of **FIGS. 4** and **5**, other means may be used to communicate sign information such as symbols and characters.

The vehicle information system **400** comprises a reader **420** and a processor **430.** The reader is any kind of device able to detect the marker communication information. The processor is any kind of device that is able to convert the marker communication information into output information. The specific aspects of the reader **420** will be determined based on the format of the marker communication information. Generally, the reader **420** is able to receive an optical signal from the marker **300.**

Generally, the vehicle identification system is associated with a vehicle. For example, the vehicle identification system may be mounted in or on the vehicle. The location and means of associating the system with the vehicle is not critical so long as the vehicle identification system can interact with a sign comprising a marker.

For the vehicle information system **400** to read the marker communication information, the vehicle information system **400** first needs to identify the marker **300.** In one embodiment, the vehicle information system **400** identifies the marker **300** from the information it receives by reading and processing the marker communication information. In one embodiment, the vehicle information system **400** identifies the marker **300** by matching with image or character recognitions software a predetermined property, such as shape, color, or retroreflective properties, of the marker **300.**

In one embodiment, the reader **420** of the vehicle information system **400** comprises a camera to receive the marker communication information. In one embodiment, the reader **420** of the vehicle information system **400** comprises a camera with a lens to receive the marker communication information. In one embodiment, the reader **420** of the vehicle information system **400** comprises a camera with a lens and a wavelength-sensitive filter to receive the marker communication information. In one embodiment, reader **420** receives the marker communication information in a specific range of wavelengths that may be outside of the range of wavelengths visible by the human eye. In one embodiment, the specific range of wavelengths of the marker communication information received by the reader **420** is infrared or near-infrared (collectively referred to as "IR").

The reader **420** will match the functionality of the marker communication information of the marker **300.** For example: if the marker communication information is optical communication, the reader **420** will comprise a camera and lens; if the marker communication information is optical communication within a specific wavelength range, the reader **420** will comprise a wavelength-specific camera and lens. It is understood that the marker communication information can comprise one or more types of information and therefore the reader **420** might have one or more capabilities for reading the marker communication information.

Typically the vehicle information system **400** includes a light source **410** for directing light to the marker **300** to take particular advantage of retroreflective properties of the marker. Generally, the light source **410** emits light to the marker **300.** In one embodiment, the light source **410** emits light to the marker **300** in a specific range of wavelengths. In one embodiment, the specific range of wavelengths of light emitted from the light source **410** is outside the range of wavelengths visible by the human eye. In one embodiment, the specific range of wavelengths of light emitted from the light source is IR.

The vehicle information system **400** includes a processor **430** for interpreting the marker communication information received by the reader **420** and converting it to output information. The processor **430** comprises common computer processor components such as a memory. In one embodiment, the processor **430** comprises software code for interpreting the marker communication information. In one embodiment, the processor **430** comprises pattern recognition or optical character recognition software. The processor **430** may control a transmitter and receiver and be able to send and receive information, such as the output information, from the vehicle information system **400** to external devices. For example, the processor **430** may send the output information to an internet-based information storage system, which in turn sends comprehensive information back to the processor **430** regarding the output information.

The vehicle information system **400** receives the marker communication information from the marker **300** to the vehicle **600.** In one embodiment, the vehicle **600** comprises the vehicle information system **400** that reads the marker communication information and processes the marker communication into output information. The processed output information may provide visual or audio information to the driver or may control a function of the vehicle **600.**

In one embodiment, the vehicle information system **400** includes a transmitting source, such as a light source **410,** that first sends a signal, such as light, to the marker **300.** Then, the vehicle information system **400** reads the returned marker communication information and processes the marker communication into output information.

The marker **300** functions to send marker communication information from the marker **300** to the vehicle **600.** Generally, the marker **300** receives a signal, such as light from the vehicle information system **400.** Then the marker **300** returns marker communication information to the vehicle information system **400.**

The marker communication information provides information to the vehicle information system **400** about sign communication information.

In one embodiment, the output information is matched from stored information in the vehicle information system **400** such that a function is applied by the processor **430.** For example, marker communication information may provide information that there is a "stop" sign 100 meters ahead. The processor **430** could match to any number of functions, such as an audio message to the driver that says "Stop Ahead" or the processor **430** could control braking of the vehicle **600.**

Although specific embodiments of this invention have been shown and described herein, it is understood that these embodiments are merely illustrative of the many possible specific arrangements that can be devised in application of the principles of the invention. Numerous and varied other arrangements can be devised in accordance with these principles by those of skill in the art without departing from the spirit and scope of the invention. Thus, the scope of the present invention should not be limited to the structures described in this application, but only by the structures described by the language of the claims and the equivalents of those structures.

## Claims

1. An identification system comprising:
a sign comprising visible-light-viewable sign communication information located on a viewable surface of the sign, wherein the sign communication information is IR-visible; and
a visible-light transparent, IR readable marker at a predetermined location relative to the viewable surface of the sign, wherein the marker comprises IR-visible marker communication information comprising optical communication;
wherein the marker does not overlap the sign communication information.

2. The identification system of claim 1, wherein the predetermined location is a visible-light-viewable border surrounding the sign communication information.

3. The identification system of any one of the preceding claims, wherein the marker is attached to the sign.

4. The identification system of any one of the preceding claims, wherein the marker information is static information comprising a machine-readable code.

5. The identification system of any one of the preceding claims, wherein the marker comprises retroreflective film, wherein the retroreflective film reflects the light from the light source at a specific angle with respect to the reader.

6. The identification system of any one of the preceding claims, wherein the marker comprises multi-layer optical film.

7. The identification system of any one of the preceding claims, wherein the marker comprises a wavelength-specific ink viewable by the reader.

8. The identification system of any one of the preceding claims, wherein the marker comprises a polymeric film containing an IR-absorbing substance.

9. The identification system of any one of the preceding claims, wherein the marker comprises at least two distinct submarkers, each at a predetermined location relative to the viewable surface of the sign, wherein each submarker comprises IR-visible marker communication information comprising optical communication; and
wherein neither of the two submarkers overlap the sign communication information.

10. The identification system of claim 9, wherein each of the two submarkers comprise the same IR-visible marker communication information.

11. The identification system of any one of the preceding claims, further comprising;
a vehicle information system comprising a light source to send IR light to the marker, a reader to read the optical communication, and a processor to convert the optical communication into output information;
wherein the optical communication information of the marker is retroreflected light from the light source;
wherein the output information is at least a recognition of the sign communication information.

12. The identification system of claim 11, wherein the reader of the vehicle information system comprises a camera with a lens to receive the marker communication information.

13. The identification system of claim 11 or 12, wherein the processor communicates with an internet-based information storage system.

14. The identification system of any one of claims 11 to 13, further comprising a vehicle, wherein the vehicle information system is associated with the vehicle.

15. The identification system of any one of claims 11 to 14, wherein the output information is used to control an operation of the vehicle.
